# DEMANDE DE BREVET EUROPEEN

(11) **EP 0 551 223 A1**
(43) Date de publication de la demande: **14.07.1993**
(21) Numéro de dépôt: 93400009.2
(22) Date de dépôt: 05.01.1993
(51) Int. Cl.: H04B 7/212, H04L 12/56

(54) **Procédé de transmission de données pour agencement de communication et émetteurs/récepteurs associés**

(30) Priorité: 08.01.1992 FR 9200123
(71) Demandeur: COMPAGNIE GENERALE D'AUTOMATISME CGA-HBS, F-91220 Brétigny sur Orge (FR)
(72) Inventeur: Bueno, Serge, F-91220 Bretigny sur Orge (FR); Beteille, Jacques, F-78114 Magny les Hameaux (FR)
(74) Mandataire: Gosse, Michel

(57) **Abrégé**

L'invention concerne un procédé de transmission de données pour un agencement de communication comprenant une station maîtresse émettrice/réceptrice échangeant des signaux contenant des données avec des terminaux émetteurs/récepteurs au travers d'un canal fonctionnant dans deux directions et partagé dans le temps par les terminaux et la station. Pour éviter la contention sur le canal montant affecté à la transmission des terminaux vers la station pendant des fenêtres de temps (40M) du canal montant, on prévoit une phase d'échange d'information de contention entre la station et les terminaux, sous forme de signaux à impulsions (60,61,62) présentés dans des créneaux de temps (51,52) préservant l'anonymat des terminaux. Cette phase se déroule avant chaque fenêtre de temps (40M) et permet à la station d'autoriser un seul terminal à émettre pendant cette fenêtre de temps.

## Description

L'invention se rapporte à un procédé de transmission de données, pour agencement de communication, dans un cadre où une pluralité de terminaux émetteurs/récepteurs échangent des signaux contenant des données avec une station maîtresse émettrice/réceptrice au travers d'un canal de transmission fonctionnant dans deux directions et exploité en temps partagé alternativement par lesdits terminaux et ladite station respectivement pendant des fenêtres de temps d'un canal montant affecté à la transmission des terminaux vers la station maîtresse et des fenêtres de temps d'un canal descendant affecté à la transmission dans la direction opposée. Elle s'applique en particulier aux agencements de communication courte distance utilisés notamment pour le contrôle automatique des passages de véhicules automobiles devant les sections à péage d'autoroute.

Dans ce type d'agencement de communication, plusieurs terminaux présents dans une zone de communication d'une station maîtresse sont susceptibles de recevoir en même temps un signal contenant des données transmis par celle-ci pendant les fenêtres de temps du canal descendant. A l'inverse, la station maîtresse est susceptible de recevoir des signaux contenant des données transmis par plusieurs terminaux pendant les fenêtres de temps du canal montant qui est exploité de façon autonome par chaque terminal en fonction de ses propres besoins. Si plusieurs terminaux transmettent ensemble dans la même fenêtre de temps du canal montant, les signaux transmis par ces terminaux se brouillent mutuellement, empêchant la station maîtresse d'obtenir les données contenues dans les signaux reçus. Ce phénomène de contention sur le canal montant est préjudiciable au rendement du canal de transmission. Dans la mesure où plusieurs terminaux sont susceptibles d'exploiter le canal montant pendant la même fenêtre de temps du canal montant, il est nécessaire de mettre en oeuvre un mécanisme de gestion de la contention qui en résulte.

Ce mécanisme s'insère dans les fonctions associées à la couche deux du modèle de système ouvert dit "OSI" ("Open System Interconnection"), et plus précisément dans la sous-couche dite "MAC" ("Media Access Control") chargée de répartir une ressource de transmission entre différents utilisateurs potentiels.

On connaît déjà un procédé de transmission de données pour de tels agencements de communication courte distance basé sur le concept dit "Slotted-Aloha". Selon ce procédé connu, on affecte des fenêtres de temps de durée fixe alternativement au canal descendant et au canal montant. Un terminal désireux de transmettre des signaux contenant des données sur le canal montant, génère un nombre entier aléatoire N et transmet les signaux contenant des données dans la Nième fenêtre de temps du canal montant comptée à partir de l'instant où il a décidé de transmettre. Deux cas peuvent se produire. Dans le premier cas, si ce terminal est seul à occuper cette Nième fenêtre de temps du canal montant, la station maîtresse est susceptible d'obtenir les données transmises et retourne, dans la fenêtre de temps du canal descendant succédant immédiatement la Nième fenêtre de temps du canal montant, un accusé de réception confirmant l'établissement de la communication. Dans le second cas, si plusieurs terminaux occupent la Nième fenêtre de temps du canal montant, la station retourne à ces terminaux un accusé de réception les informant de l'impossibilité d'établir la communication du fait d'une contention. En réponse, les terminaux ainsi informés de cette contention, génèrent de nouveau un nombre entier aléatoire pour tenter de transmettre des signaux contenant des données dans une nouvelle fenêtre de temps du canal montant. On peut alors espérer qu'ils ne viendront pas de nouveau transmettre à plusieurs ensemble dans la même fenêtre de temps du canal montant.

Ce procédé connu de transmission de données présente l'inconvénient qu'à chaque contention survenant sur le canal montant, une fenêtre entière du canal montant est perdue du fait que l'échange d'information de contention du canal montant se déroule pendant les fenêtres de temps du canal montant réservées à la transmission des signaux contenant des données. Le rendement du canal montant est très faible. Des mesures établissent que le rendement du canal montant (exprimé par le rapport entre le nombre de fenêtres de temps du canal montant réellement utilisées et le nombre de fenêtres de temps du canal montant disponibles par unités de temps) ne peut excéder 0,368. Cet optimum est par ailleurs atteint pour un faible nombre de terminaux susceptibles de communiquer en même temps avec la station, typiquement deux à trois terminaux. Lorsque le nombre de terminaux augmente, le rendement du canal montant décroît rapidement (0,1 pour dix terminaux) ce qui augmente d'autant le temps moyen nécessaire à chaque terminal pour établir une communication avec la station.

L'objet de l'invention est d'améliorer de façon significative le rendement du canal montant, notamment pour un nombre important de terminaux désireux d'établir en même temps une communication avec la station, sans pour cela utiliser des identifiants de terminaux préalablement définis, afin de préserver l'anonymat des possesseurs de terminaux. Un autre objectif de l'invention est de fournir un procédé de transmission de données pour agencement de communication, susceptible d'être utilisé dans l'application ci-dessus indiquée pour laquelle les terminaux doivent pouvoir établir une communication avec la station en un temps le plus réduit possible.

A cet effet, L'invention a pour objet un procédé de transmission de données, pour agencement de communication, dans un cadre où une pluralité de terminaux émetteurs/récepteurs échangent des signaux contenant des données avec une station maîtresse émettrice/réceptrice au travers d'un canal de transmission fonctionnant dans deux directions et exploité en temps partagé alternativement par lesdits terminaux et ladite station respectivement pendant des fenêtres de temps d'un canal montant affecté à la transmission des terminaux vers la station maîtresse et des fenêtres de temps d'un canal descendant affecté à la transmission dans la direction opposée, et incluant une phase d'échange d'information de contention entre ladite station maîtresse et lesdits terminaux désireux de transmettre sur le canal montant des signaux contenant des données pendant une fenêtre de temps particulière du canal montant, caractérisé en ce que cette phase d'échange d'information de contention se déroule avant ladite fenêtre de temps particulière du canal montant et comprend, dans l'ordre, les étapes suivantes:
- transmission sur le canal montant, par chaque terminal, d'une requête d'accès au canal montant sous la forme d'un premier signal à impulsion présenté dans un créneau de temps du canal montant, dit de contention, qui est choisi aléatoirement par chaque terminal, parmi plusieurs premiers créneaux de temps successifs;
- transmission sur le canal descendant, par la station maîtresse, d'un message indicatif d'un créneau de temps de contention particulier pendant lequel un seul premier signal à impulsion à été présenté, sous la forme d'un second signal à impulsions présenté dans un créneau de temps du canal descendant, dit de gestion de contention, succédant aux créneaux de temps de contention;
- transmission sur le canal montant, par le terminal ayant transmis un premier signal à impulsion dans ledit créneau de temps de contention particulier, des signaux contenant des données, pendant ladite fenêtre de temps particulière du canal montant après détection du second signal à impulsions.

Comme on peut le comprendre, chaque contention potentielle du canal montant est résolue avant chaque transmission de signaux contenant des données sur le canal montant. La résolution de la contention prend peu de temps du fait que les informations de contention sont portées par des signaux à impulsions et autorise une distribution des ressources du canal montant sans utiliser des identifiants de terminaux préalablement définis. Par ailleurs, le procédé de transmission de données selon l'invention ne nécessite pas d'utiliser des fenêtres de temps allouées au canal montant et au canal descendant qui soient de taille fixe puisque c'est la station maîtresse qui détient le contrôle de la distribution des ressources du canal montant. Ce procédé permet ainsi d'obtenir un rendement du canal montant proche de 0,9 pour environ dix terminaux désireux d'établir en même temps une communication avec la station maîtresse, en gérant seulement quatre créneaux de temps de contention. Il est évident qu'en augmentant le nombre de créneaux de temps de contention, le rendement du canal montant peut encore être amélioré puisque la probabilité que deux terminaux transmettent un premier signal à impulsion dans le même créneau de temps de contention diminue.

Avantageusement, le message indicatif d'un créneau de temps de contention particulier indique aussi une opération particulière à entreprendre par les terminaux ayant transmis un premier signal à impulsion sur le canal montant pendant ledit créneau de temps de contention particulier.

Cette opération particulière peut consister, pour chaque terminal concerné, à engendrer un nombre aléatoire entier et à transmettre sur le canal montant pendant ladite fenêtre de temps particulière du canal montant, des signaux contenant des données, si ce nombre aléatoire entier est égal à un nombre entier prédéfini.

En variante, l'opération particulière peut consister, pour chaque terminal concerné, à transmettre à nouveau une requête d'accès au canal montant sous forme d'un premier signal à impulsion présenté dans un créneau de temps de contention qui est choisi aléatoirement par chaque terminal, parmi plusieurs seconds créneaux de temps de contention successifs succédant au créneau de temps de gestion de contention.

Avantageusement, lesdits créneaux de temps de contention et de gestion de contention sont intercalés entre la fenêtre de temps particulière du canal montant et la fenêtre de temps du canal descendant qui la précède immédiatement ce qui simplifie encore le fonctionnement des terminaux et de la station maîtresse.

L'invention s'étend aussi à un terminal émetteur/récepteur, à une station maîtresse émettrice/réceptrice et à un agencement de communication pour mettre en oeuvre le procédé de transmission selon l'invention.

D'autres caractéristiques et avantages de l'invention apparaîtront encore mieux à la lecture de la description détaillée qui suit d'un exemple de réalisation de l'invention faite en référence aux dessins.

La figure 1 illustre schématiquement l'alternance des fenêtres de temps du canal montant et des fenêtres de temps du canal descendant entre lesquelles s'insèrent les créneaux de temps de contention et les créneaux de temps de gestion de contention formant des fenêtres de temps de résolution de contention.

La figure 2A illustre schématiquement la phase d'échange d'information de contention entre plusieurs terminaux et la station maîtresse selon un premier cas de résolution de contention.

La figure 2B illustre schématiquement la phase d'échange d'information de contention entre plusieurs terminaux et la station maîtresse selon un second cas de résolution de contention.

La figure 3 donne des courbes comparatives du rendement du canal montant selon le concept dit "Slotted-Aloha" et selon l'invention.

La figure 4 est une représentation schématique d'un exemple de réalisation d'un terminal émetteur/récepteur selon l'invention.

La figure 5 est une représentation schématique d'un exemple de réalisation d'une station maîtresse émettrice/réceptrice selon l'invention.

Le procédé de transmission de données selon l'invention s'applique à un agencement de communication destiné notamment, mais non exclusivement, à être intégré dans un ensemble plus vaste qui peut être une installation de contrôle automatique des passages de véhicules automobiles devant des sections à péage pour autoroute. Dans un tel cas, la station maîtresse peut être reliée à un centre de gestion de sections à péage d'autoroute et les terminaux, de construction identique, se présentent sous la forme de petits boîtiers transportables dans un véhicule automobile, chaque boîtier contenant par exemple une carte de crédit électronique chargée en fonds et débitée à chaque transaction avec la station maîtresse lors du passage du véhicule devant une section à péage.

Chaque terminal émetteur/récepteur est équipé pour pouvoir communiquer avec la station maîtresse émettrice/réceptrice par échange de signaux contenant des données, par exemple des signaux infra-rouge, hyperfréquence ou autres, selon un protocole de communication préalablement établi.

Les terminaux émetteurs/récepteurs et la station maîtresse émettrice réceptrice communiquent ensemble au travers d'un canal de transmission fonctionnant dans deux directions qui peut être une liaison filaire ou dans le cas présent une liaison non filaire dont la longueur est de quelques mètres. Ce canal de transmission est exploité en temps partagé alternativement par les terminaux et la station respectivement pendant des fenêtres de temps d'un canal montant affecté à la transmission des terminaux vers la station maîtresse (canal du type n vers 1) et des fenêtres de temps d'un canal descendant affecté à la transmission dans la direction opposée (canal du type 1 vers n).

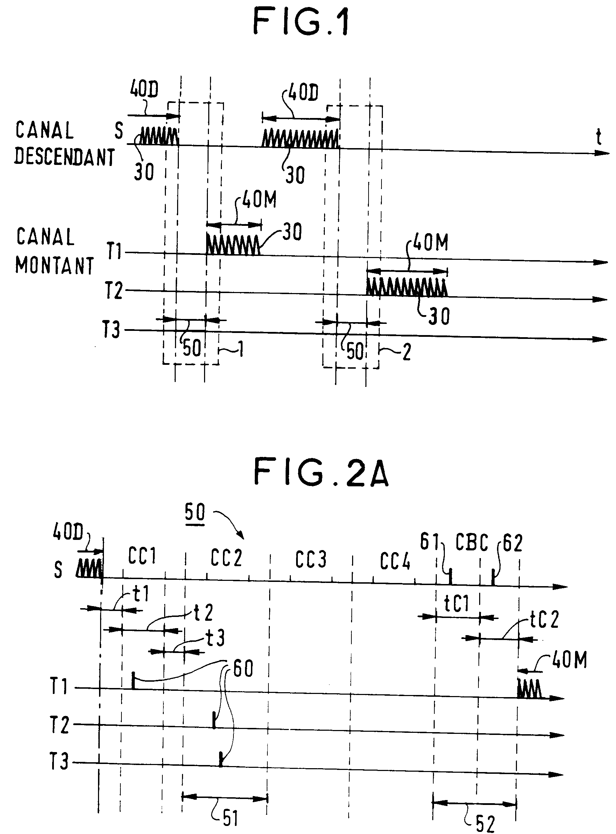

Plus précisément et comme visible sur la figure 1, selon le protocole de communication, on affecte alternativement dans le temps au canal montant et au canal descendant des fenêtres de temps respectivement 40M,40D. Ces fenêtres de temps 40M,40D peuvent être de taille variable au cours du temps. A l'intérieur d'une fenêtre de temps particulière 40M du canal montant, plusieurs terminaux T peuvent décider de transmettre des signaux 30 contenant des données à la station maîtresse S. Pour éviter la contention sur le canal montant, le procédé de transmission inclut une phase d'échange d'information de contention, entre la station maîtresse et les terminaux, qui se déroule pendant une fenêtre de temps dite de résolution de contention 50 entre la fenêtre de temps particulière du canal montant en question et la fenêtre de temps du canal descendant qui précède immédiatement cette dernière. Pendant chaque fenêtre de temps de résolution de contention 50, la station maîtresse décide de l'affectation de la fenêtre de temps 40M du canal montant à un terminal particulier.

Comme visible sur cette figure, le canal montant est partagé par trois terminaux T1,T2,T3, le terminal T1 l'occupant après une première phase d'échange d'information de contention repérée par le cadre en pointillé référencé 1, et le terminal T2 l'occupant après une seconde phase d'échange d'information de contention repérée par le cadre en pointillé référencé 2.

En se reférant à la figure 2A qui illustre la phase d'échange d'information de contention du cadre 1, la fenêtre de temps de résolution de contention 50 est formée d'une pluralité de créneaux de temps 51 du canal montant, dits de contention, successifs et de préférence d'une durée identique, et d'un créneau de temps 52 du canal descendant, dit de gestion de contention, succédant aux créneaux de temps de contention du canal montant. Les limites temporelles des créneaux de temps sont définies identiquement par les terminaux et par la station maîtresse à partir d'un instant de référence qui peut être l'instant où se termine une fenêtre temporelle 40D du canal descendant ainsi qu'on le verra par la suite.

Si un terminal T1 désire transmettre des signaux contenant des données sur le canal montant pendant une fenêtre de temps 40M particulière du canal montant, il déclenche un compteur de tops d'horloge (l'horloge donnant des tops d'horloge à intervalles de temps réguliers appelés temps bit), à partir de la fin de la fenêtre de temps du canal descendant 40D qui précède cette fenêtre de temps particulière du canal montant 40M, pour définir les limites temporelles des créneaux de temps 51 et 52. Chaque créneau de temps 51 du canal montant comprend chronologiquement t1+t2+t3 temps bit. Les t1 et t3 temps bits sont réservés à la séparation temporelle des créneaux de temps de contention et les t2 temps bits sont réservés à la transmission de signaux. La valeur de t2 est choisie plus grande que t1 et t3 et dépend du nombre de créneaux de temps de contention choisi par fenêtre de temps de résolution de contention. On peut par exemple choisir t1=t3=2 et t2=4 pour une fenêtre de temps 50 de résolution de contention comportant quatre créneaux de temps 51 de contention CC1,CC2,CC3,CC4. Au cours de la définition des limites temporelles des créneaux de temps de contention, le treminal transmet une requête d'accès au canal montant sous la forme d'un signal à impulsion 60 présenté dans un créneau de temps de contention 51, qui est choisi aléatoirement, parmi la pluralité de créneaux de temps 51 successifs. Ce choix aléatoire d'un créneau de temps de contention peut avantageusement être complété par le choix aléatoire d'un temps bit parmi les t2 temps bit du créneau de temps de contention choisi aléatoirement. Le signal à impulsion est alors présenté dans le temps bit choisi aléatoirement du créneau de temps du canal montant choisi aléatoirement. De ce fait, il faut considérer que le signal à impulsion comporte une seule impulsion 60 dont la durée est inférieure à un temps bit.

Par conséquent si plusieurs terminaux désirent accéder en même temps au canal montant (dans le cas illustré à la figure 2A, trois terminaux T1-T3 étant en concurrence), il existera des créneaux de temps de contention CC3,CC4 pendant lesquels aucun signal à impulsion 60 n'aura été présenté, des créneaux de temps de contention CC2 pendant lesquels plusieurs signaux à impulsion 60 auront été présentés et des créneaux de temps de contention CC1 pendant lesquels un seul signal à impulsion 60 à été présenté.

A la fin de chaque fenêtre de temps 40D du canal descendant, la station maîtresse déclenche de la même façon un compteur de tops d'horloge pour définir de façon sensiblement identique les mêmes créneaux de temps 51,52, associer la réception d'un signal à impulsion 60 transmis sur le canal montant par un terminal à un créneau de temps 51 de contention et comptabiliser pour chaque créneau de temps de contention d'une fenêtre de temps de résolution de contention le nombre de signaux à impulsion 60 présentés dans le créneau de temps de contention en question. Le comptage systématique des requêtés d'accès au canal montant pour chaque créneau de temps de contention permet à la station maîtresse d'identifier chacun de ces derniers par son rang dans la succession des créneaux de temps de contention d'une fenêtre de temps de résolution de contention.

Plusieurs cas peuvent se produire:

### cas 1:

Il existe un ou plusieurs créneaux de temps de contention pendant lequel un seul signal à impulsion 60 a été présenté. La station maîtresse détecte, lors de la comptabilisation, ce créneau particulier (CC1) ou le premier de ceux-ci. La station transmet sur le canal descendant un message indicatif du créneau de temps de contention particulier, sous la forme d'un autre signal à impulsions 61 présenté dans le créneau de temps de gestion de contention 52 du canal descendant qui est constitué de tc1 (nombre entier) temps bits. Ce message indique avantageusement le rang du créneau de temps de contention particulier et le signal à impulsions 61 comporte une ou plusieurs impulsions codant le rang (nombre entier supérieur ou égal à un). Le codage peut être direct: le nombre d'impulsions du signal à impulsions 61 est égal à la valeur du rang du créneau de temps de contention particulier. Dans l'exemple représenté, le signal à impulsions 61 comporte une seule impulsion pour désigner le créneau de temps 51 de rang 1 (CC1). Dans l'exemple représenté, tc1 est égal à 8 mais il est évident qu'on choisira la valeur de tc1 en fonction du codage utilisé.

Chaque terminal ayant transmis un signal à impulsion 60 reçoit sur le canal descendant le signal à impulsions 61, obtient, par décodage direct, la valeur du rang d'un créneau de temps de contention particulier élu par la station maîtresse et compare cette valeur à la valeur du rang du créneau de temps de contention qu'il avait choisi aléatoirement. S'il détecte une égalité , il transmet sur le canal montant des signaux contenant des données pendant la fenêtre de temps particulière du canal montant 40M.

### cas 2:

Il n'existe pas de créneau de temps de contention pendant lequel au moins un signal à impulsion 60 a été présenté. La station maîtresse ouvre alors une nouvelle fenêtre de temps 40D du canal descendant immédiatement après le créneau de temps de gestion de contention.

### cas 3:

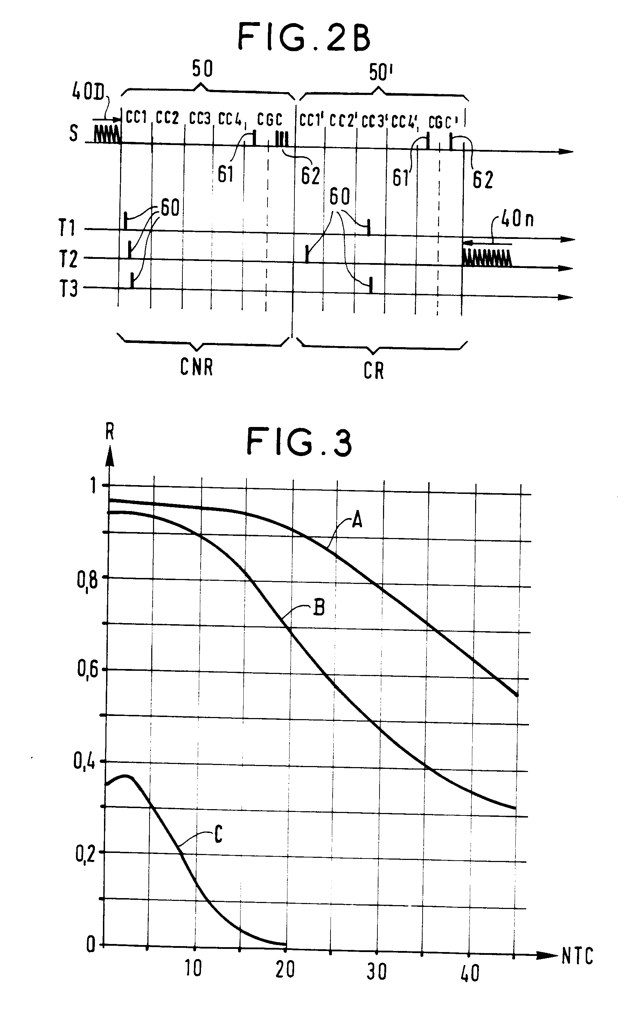

Il n'existe pas un ou plusieurs créneaux de temps de contention pendant lequel un seul signal à impulsion 60 a été présenté mais il existe au moins un créneau de temps de contention particulier pour lequel le nombre de requête d'accès au canal montant comptabilisées est supérieur ou égal à deux. La contention ne peut alors être résolue immédiatement (voir figure 2B). Selon l'invention, le créneau de temps de contention particulier sélectionné par la station maîtresse est celui pour lequel le nombre de requêtes d'accès au canal montant est le plus petit et le message indicatif d'un créneau de temps de contention particulier indique aussi une opération particulière à entreprendre par les terminaux ayant transmis un premier signal à impulsion sur le canal montant pendant ledit créneau de temps de contention particulier. Le signal à impulsion transmis par la station comporte à cet effet, outre les impulsions 61 codant le rang du créneau de temps de contention particulier, des impulsions 62 codant l'opération à entreprendre qui sont présentées dans tc2 (nombre entier) temps bit. Dans l'exemple illustré, tc1=tc2=8. L'opération particulière consiste (option A), pour chaque terminal concerné, à engendrer un nombre aléatoire entier et à transmettre sur le canal montant pendant ladite fenêtre de temps particulière du canal montant, des signaux contenant des données, si ce nombre aléatoire entier est égal à un nombre entier prédéfini. L'opération particulière peut consister aussi (option B), pour chaque terminal concerné, à transmettre à nouveau une requête d'accès au canal montant sous forme d'un premier signal à impulsion 60 présenté dans un créneau de temps de contention qui est choisi aléatoirement par chaque terminal, parmi plusieurs seconds créneaux 51 de temps de contention successifs CC1',CC2',CC3',CC4' succédant au créneau de temps de gestion de contention 52. Dans ce cas, l'opération est réitérée un nombre suffisant de fois jusqu'à ce que la station maîtresse puisse allouer le canal montant à un unique terminal par transmission d'un signal à impulsions 61,62 dans un nouveau créneau de temps de gestion de contention CGC'.

On peut par exemple établir par convention que le message transmis par la station pendant le créneau de temps de gestion de contention 52 est constitué dans l'ordre chronologique de:
- 1 à 4 impulsions présentées dans les tc1 temps bit, dont le nombre indique le rang du créneau de temps de contention 51 sélectionné par la station maîtresse.
- 1 à 4 impulsions présentées dans les tc2 temps bit, dont le nombre indique les opérations suivantes à entreprendre par les terminaux:
   -> 1 impulsion (opération numéro 1): transmettre des signaux contenant des données pendant la fenêtre de temps particulière du canal montant selon le rang du créneau de temps de contention sélectionné.
   -> 2 impulsions (opération numéro 2): générer un nombre aléatoire et transmettre des signaux contenant des données pendant la fenêtre de temps particulière du canal montant selon la valeur du nombre aléatoire.
   -> 3 impulsions (opération numéro 3): transmettre de nouveau un signal à impulsion 60.

Cette situation est illustrée par la figure 2B qui correspond au cadre B de la figure 1. Sur cette figure , les terminaux T1-T3 sont en concurrence et transmettre chacun un signal à impulsion 60 dans le créneau de temps de contention CC1. Le signal à impulsions 61,62 indique que le créneau de temps de contention CC1 est sélectionné et que l'opération particulière consiste, pour chaque terminal en concurrence, à transmettre de nouveau un signal à impulsion 60 après le créneau de temps de gestion de contention CGC. On est dans une phase de contention non résolue indiquée par CNR sur la figure. Pour la nouvelle fenêtre de temps de résolution de contention 50' succédant immédiatement à la fenêtre de temps de résolution de contention 50, il existe un seul créneau de temps de contention CC1 pendant lequel un seul signal à impulsion 60 à été présenté. La station maîtresse transmet alors un second signal à impulsions 61,62 indicatif du créneau de temps de contention de rang 1 et de l'opération numéro 1 dans le créneau de temps de gestion de contention CGC'. On est alors dans une phase de contention résolue indiquée par CR sur la figure.

Ce mécanisme nécessite finalement que quelque temps bit et les créneaux de temps de contention 51 et de gestion de contention 52 peuvent avantageusement être intercalés entre chaque fenêtre de temps particulière 40M du canal montant et la fenêtre de temps 40D du canal descendant qui la précède immédiatement. Bien entendu, les valeurs de t1,t2,t3,tc1,tc2 pourront être adaptées pour tenir compte du nombre de terminaux susceptibles de communiquer en même temps avec la station maîtresse.

La figure 3 donne le rendement R du canal montant en fonction du nombre de terminaux en concurrence NTC. On voit que le rendement du canal montant exploité avec le procédé selon l'invention, que ce soit selon l'option A (courbe A) ou l'option B (courbe B) est environ égal à 0,9 pour une dizaine de terminaux en concurrence alors qu'avec le concept "Slotted-Aloha" (courbe C) il est inférieur à 0,15. Les courbes sont données pour des fenêtres de temps de résolution de contention comprenant chacune quatre créneaux de temps de contention.

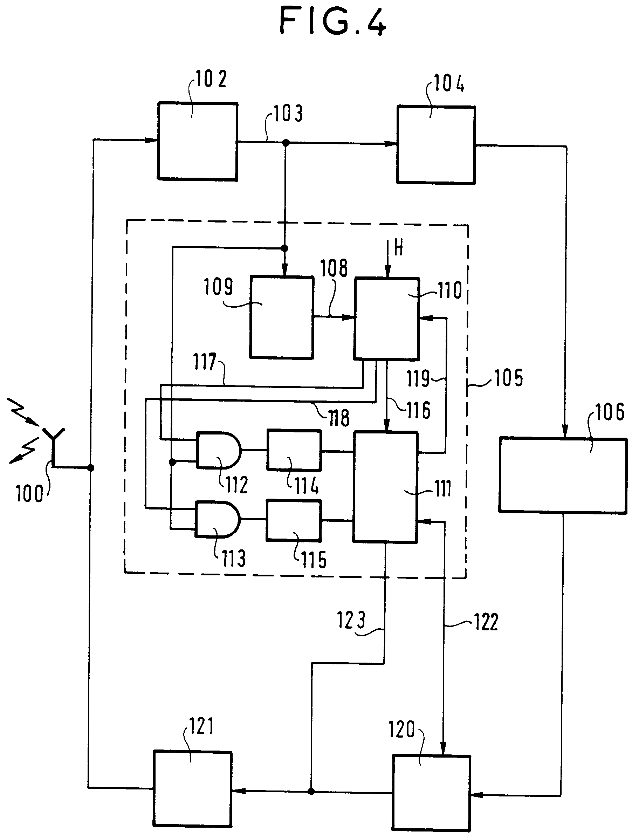

En se reportant à la figure 4, un terminal émetteur/récepteur comprend une antenne d'émission/réception classique 100. Le signal reçu à l'antenne 100 est appliqué (après transposition éventuelle) à un démodulateur 102 qui produit de façon classique un signal en bande de base. ce signal en bande de base présent en 103 est appliqué, d'une part, en entrée d'un décodeur classique 104, et d'autre part, en entrée d'une logique de commande 105. Le décodeur 104 extrait les données du signal bande de base et les fournit à une unité de traitement 106. L'ensemble 100,102,104,106 constitue la partie réception du terminal. L'unité de traitement 106 est reliée en sortie à un encodeur 120 classique relié à l'antenne 100 au travers d'un modulateur 121 pour produire des signaux contenant des données. Ces derniers éléments constituent ensemble la partie émission du terminal. Les deux partie émission et réception incorporent bien entendu tout les éléments nécessaires à l'échange de signaux contenant des données avec une station maîtresse émettrice/réceptrice selon un protocole de communication préalablement établi.

La logique de commande 105 comprend un moyen 109 pour détecter la fin de chaque fenêtre de temps 40D du canal descendant, qui peut être un détecteur d'enveloppe apte à détecter l'instant où finit l'enveloppe du signal en bande de base présent en 103 et reçu pendant cette fenêtre de temps 40D. Le détecteur d'enveloppe 109 produit un signal de commande de synchronisation présent en 108 à l'instant correspondant à la fin d'une fenêtre de temps 40D qui commande un synthétiseur 110 de signaux de synchronisation. En réponse au signal de commande de synchronisation et à un signal d'horloge interne H, le synthétiseur 110 produit des signaux de synchronisation délimitant les créneaux de temps 51 de contention du canal montant et le créneau de temps 52 de gestion de contention du canal descendant formant une fenêtre de temps 50 de résolution de contention. Ces signaux de synchronisation délimitent aussi dans chaque créneau de temps de contention et de gestion de contention les t1,t2,t3,tc1,tc2 temps bits.

Lorsque des données produites par l'unité de traitement 106 doivent être transmises sur le canal montant pendant une fenêtre de temps 40M particulière, un élément de la partie émission tel que l'encodeur 120 produit un signal interne de demande d'émission qui est fourni à un séquenceur 111 au travers d'une liaison à double sens 122.

Le séquenceur 111 qui reçoit les signaux de synchronisation et le signal d'horloge H à travers la liaison 116 dérive un signal à impulsion 60 qui est présenté dans un des t2 temps bit choisi aléatoirement d'un des créneaux de temps de contention choisi aussi aléatoirement par le biais de portes logiques et de circuits multiplexeurs commandés par des circuits générateurs de nombres aléatoires. Le signal à impulsion 60 présent en 123 représentatif d'une requête d'accès au canal montant, est transmis sur le canal montant à la station maîtresse via le modulateur 121 et l'antenne 100.

Il faut comprendre que la phase d'échange d'information de contention entre le terminal et la station maîtresse débute dès la fin d'une fenêtre de temps 40D du canal montant qui suit l'instant où l'encodeur 120 engendre le signal de demande d'émission. L'encodeur 120 est alors placé en position d'attente d'un message d'autorisation d'émission reçu sur la ligne à double sens 122.

La logique de commande 105 comprend aussi deux portes logiques ET 112,113 et deux compteurs 114,115 relié chacun à la sortie d'une porte logique respective. Les portes logiques 112,113 ont pour rôle de détecter respectivement les impulsions 61 et les impulsions 62 formant le signal à impulsions transmis par la station maîtresse et recues pendant le créneau de temps 52 de gestion de contention du canal descendant. Comme visible sur la figure 4, les portes logiques 112,113 sont commandées respectivement par les signaux de synchronisation délimitant les tc1 temps bit présents en 117 et les signaux de synchronisation délimitant les tc2 temps bits présents en 118 produits par le synthétiseur de signaux de synchronisation 110 et reçoivent le signal fourni par le démodulateur 102 et présent en 103, ce signal ayant été transmis par la station maîtresse pendant le créneau de temps 52 du canal montant. Les compteurs 114,115 ont pour rôle de comptabiliser ces différentes impulsions pour obtenir le rang du créneau de temps 51 sélectionné par la station et l'opération à entreprendre. La sortie de chaque compteur est reliée au séquenceur 111, par exemple un microprocesseur agencé pour fournir, en fonction du contenu des compteurs:
- le signal, présent en 122, d'autorisation d'émission à l'encodeur 120, éventuellement après avoir engendrer un nombre aléatoire selon l'option A, ou
- un signal, présent en 119, de relance de la phase d'échange d'information de contention, au synthétiseur de signaux de synchronisation 110, selon l'option B.

En réponse au signal d'autorisation d'émission, l'encodeur 120 transmet sur le canal descendant les signaux contenant les données engendrés par l'unité de traitement 106 pendant la fenêtre de temps particulière 40M du canal montant qui succède à la fenêtre de temps de résolution de contention.

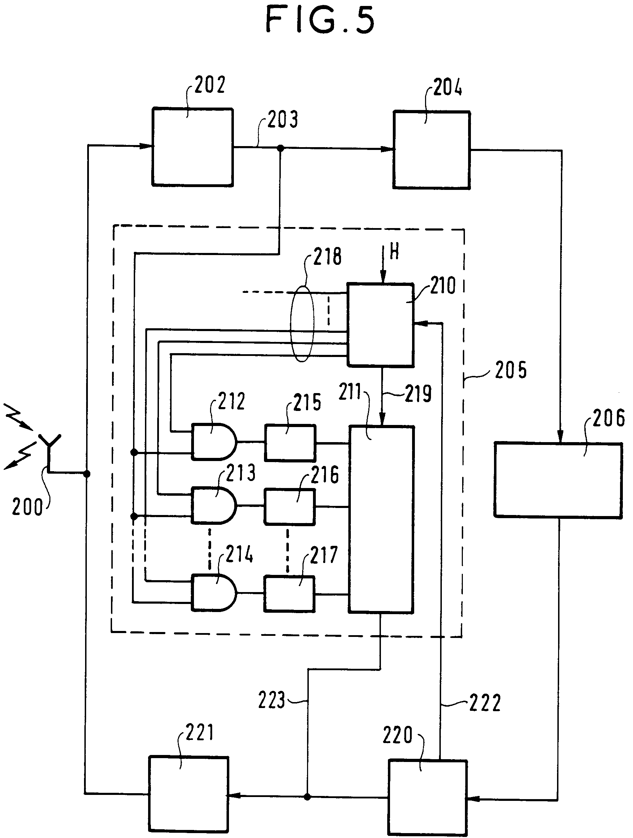

En se reportant maintenant à la figure 5, la station maîtresse émettrice/réceptrice se compose aussi d'une partie réception constituée d'une antenne 200, d'un démodulateur 202, d'un décodeur 204 et d'une unité de traitement 206 et d'une partie émission constituée de l'unité de traitement 206, de l'antenne 200, d'un encodeur 220 et d'un modulateur 221. Ces deux parties permettent l'échange de signaux contenant des données avec plusieurs terminaux émetteurs/récepteur, la station maîtresse transmettant autoritairement des signaux de données pendant les fenêtres de temps 40D du canal descendant. Elle comprend aussi une logique de commande 205 interposée entre la partie émission et la partie réception. A chaque transmission de signaux contenant des données sur le canal descendant pendant des fenêtres de temps 40D, l'encodeur 220 produit un signal de commande interne indicatif de l'instant où se finit chaque fenêtre de temps 40D.

La logique de commande 205 comprend aussi un synthétiseur de signaux de synchronisation 210 commandé par le signal de commande interne présent en 222 et qui reçoit un signal d'horloge H fourni par une horloge interne donnant des tops d'horloge à intervalles de temps réguliers. Il est bien entendu que l'horloge de la station maîtresse et l'horloge de chaque terminal ont une fréquence de travail identique.

En réponse au signal de commande interne présent en 222 et au signal d'horloge interne H, le synthétiseur 210 produit, de façon identique à un terminal, des signaux de synchronisation délimitant les créneaux de temps 51 de contention du canal montant et le créneau de temps 52 de gestion de contention du canal descendant formant une fenêtre de temps 50 de résolution de contention. Ces signaux de synchronisation délimitent aussi dans chaque créneau de temps de contention et de gestion de contention les t1,t2,t3,tc1,tc2 temps bits.

La logique de commande 205 comprend aussi une série de portes logiques ET dont trois sont représentées 212,213,214 ayant une entrée recevant le signal présent en 203.

Chaque porte logique comprend une autre entrée pour recevoir un signal de synchronisation présent en 218 et délimitant l'un des créneaux de temps de contention 51.

Le rôle de chaque porte logique est de détecter les impulsions 60 qui se présentent seulement dans le créneau de temps 51 qu'elle surveille et plus précisément dans les t2 temps bit de ce créneau de temps.

Sur la figure, trois portes logiques ont été représentées mais il faut considérer qu'elles sont en nombre égal au nombre de créneaux de temps de contention formant une fenêtre de temps de résolution de contention. La sortie de chaque porte logique est reliée à un compteur, trois compteurs 215,216,217 étant aussi représentés. Le rôle de chaque compteur est de comptabiliser le nombre d'impulsions 60 détectées par la porte logique à laquelle il est relié. Les compteurs 215,216,217 sont reliés en sortie à un séquenceur 211 dont le rôle est d'identifier un des compteurs ayant comptabilisé une seule impulsion 60, ou le compteur ayant comptabilisé le plus petit nombre d'impulsions 60 comme décrit précédemment. Il reçoit les signaux de synchronisation délimitant le créneau de temps de gestion de contention (constitué des tc1 et tc2 temps bits) et le signal d'horloge H à travers la liaison 219 pour dériver, en fonction du contenu des compteurs, un signal à impulsions 61,62 indicatif du rang du créneau de temps 51 sélectionné et de l'opération à entreprendre. Le séquenceur 211 transmet ce signal à impulsions présent en 223 sur le canal descendant par le biais du modulateur 221 et de l'antenne 200 en le présentant dans le créneau de temps de gestion de contention 52.

Il est évident que la logique de commande 105 des terminaux et la logique de commande 205 de la station maîtresse peuvent être réalisées sous la forme de logiciels susceptibles d'être installés au sein des unités de traitement des terminaux et de la station maîtresse.

Bien entendu, l'invention n'est pas limitée à l'exemple de réalisation ci-dessus décrit, et on pourra prévoir d'autres variantes sans pour cela, sortir du cadre de l'invention.

## Revendications

**1.)** Un procédé de transmission de données, pour agencement de communication, dans un cadre où une pluralité de terminaux émetteurs/récepteurs échangent des signaux contenant des données avec une station maîtresse émettrice/réceptrice au travers d'un canal de transmission fonctionnant dans deux directions et exploité en temps partagé alternativement par lesdits terminaux et ladite station respectivement pendant des fenêtres de temps (40M) d'un canal montant affecté à la transmission des terminaux vers la station maîtresse et des fenêtres de temps (40D) d'un canal descendant affecté à la transmission dans la direction opposée, et incluant une phase d'échange d'information de contention entre ladite station maîtresse et lesdits terminaux désireux de transmettre sur le canal montant des signaux contenant des données pendant une fenêtre de temps (40M) particulière du canal montant, caractérisé en ce que cette phase d'échange d'information de contention se déroule avant ladite fenêtre de temps particulière du canal montant et comprend, dans l'ordre, les étapes suivantes:
- transmission sur le canal montant, par chaque terminal, d'une requête d'accès au canal montant sous la forme d'un premier signal à impulsion (60) présenté dans un créneau de temps du canal montant, dit de contention, qui est choisi aléatoirement par chaque terminal, parmi plusieurs premiers créneaux de temps (51) successifs;
- transmission sur le canal descendant, par la station maîtresse, d'un message indicatif d'un créneau de temps de contention particulier pendant lequel un seul premier signal à impulsion à été présenté, sous la forme d'un second signal à impulsions (61,62) présenté dans un créneau de temps (52) du canal descendant, dit de gestion de contention, succédant aux créneaux de temps de contention;
- transmission sur le canal montant, par le terminal ayant transmis un premier signal à impulsion (60) dans ledit créneau de temps de contention particulier, des signaux contenant des données, pendant ladite fenêtre de temps particulière du canal montant après détection du second signal à impulsions (60,61).

**2.)** Le procédé selon la revendication 1, dans lequel le message indicatif d'un créneau de temps de contention particulier indique aussi une opération particulière à entreprendre par les terminaux ayant transmis un premier signal à impulsion (60) sur le canal montant pendant ledit créneau de temps de contention particulier.

**3.)** Le procédé selon la revendication 2, dans lequel l'opération particulière consiste, pour chaque terminal concerné, à engendrer un nombre aléatoire entier et à transmettre sur le canal montant pendant ladite fenêtre de temps particulière du canal montant, des signaux contenant des données, si ce nombre aléatoire entier est égal à un nombre entier prédéfini.

**4.)** le procédé selon la revendication 2, dans lequel l'opération particulière consiste, pour chaque terminal concerné, à transmettre à nouveau une requête d'accès au canal montant sous forme d'un premier signal à impulsion (60) présenté dans un créneau de temps de contention qui est choisi aléatoirement par chaque terminal, parmi plusieurs seconds créneaux (51) de temps de contention successifs succédant au créneau de temps de gestion de contention (52).

**5.)** Le procédé selon l'une quelconque des revendications précédentes, dans lequel lesdits créneaux de temps de contention (51) et de gestion de contention (52) sont intercalés entre la fenêtre de temps particulière (40M) du canal montant et la fenêtre de temps (40D) du canal descendant qui la précède immédiatement.

**6.)** Un terminal émetteur/récepteur, pour un agencement de communication, ledit terminal comprenant des moyens (100,102,104,106,120,121) pour échanger des signaux contenant des données avec une station maîtresse émettrice/réceptrice au travers d'un canal de transmission fonctionnant dans deux directions et exploité en temps partagé alternativement par ledit terminal et ladite station respectivement pendant des fenêtres de temps (40M) d'un canal montant affecté à la transmission du terminal vers la station maîtresse et des fenêtres de temps (40D) d'un canal descendant affecté à la transmission dans la direction opposée, caractérisé en ce qu'il comprend en outre:
- des premiers moyens (109,110) sensibles aux signaux contenant des données transmis par la station maîtresse sur le canal descendant pendant les fenêtres de temps (40D) du canal descendant, pour produire des signaux de synchronisation délimitant une pluralité de créneaux de temps (51) successifs du canal montant, dits de contention, et au moins un créneau de temps (52) du canal descendant, dit de gestion de contention, succédant aux créneaux de temps de contention, ces créneaux de temps (51,52) précédant une fenêtre de temps (40M) particulière du canal montant pendant laquelle ledit terminal désire transmettre sur le canal montant les signaux contenant des données;
- des seconds moyens (111,121) pour transmettre sur le canal montant, une requête d'accès au canal montant sous forme d'un premier signal à impulsion (60) présenté dans un créneau de temps particulier de contention choisi aléatoirement parmi lesdits créneaux de temps de contention (51);
- des troisièmes moyens (11-115) sensibles à un second signal à impulsions (61,62) reçu sur le canal descendant dans le créneau de temps de gestion de contention, pour commander la transmission des signaux contenant des données, sur le canal montant pendant ladite fenêtre de temps (40M) particulière du canal montant.

**7.)** Une station maîtresse émettrice/réceptrice, pour un agencement de communication, ladite station comprenant des moyens (200,202,204,206,220,221) pour échanger des signaux contenant des données avec plusieurs terminaux émetteurs/récepteurs au travers d'un canal de transmission fonctionnant dans deux directions et exploité en temps partagé alternativement par lesdits terminaux et ladite station respectivement pendant des fenêtres de temps (40M) d'un canal montant affecté à la transmission des terminaux vers la station maîtresse et des fenêtres de temps (40D) d'un canal descendant affecté à la transmission dans la direction opposée, caractérisé en ce qu'elle comporte en outre:
- des premiers moyens (210) sensibles aux signaux contenant des données reçus sur le canal descendant pendant les fenêtres de temps (40D) du canal descendant, pour produire des signaux de synchronisation délimitant une pluralité de créneaux de temps (51) successifs du canal montant, dits de contention, et au moins un créneau de temps (52) du canal descendant, dit de gestion de contention, succédant aux créneaux de temps de contention, ces créneaux de temps (51,52) succédant à chaque fenêtre de temps (40D) du canal descendant;
- des seconds moyens (212-218) sensibles à des premiers signaux à impulsions (60) reçus sur le canal montant dans lesdits créneaux de temps de contention (51) du canal montant, pour produire un second signal à impulsions (61,62) indicatif d'un desdits créneaux de temps de contention (51) et pour transmettre ce second signal à impulsions sur le canal descendant en le présentant dans ledit créneau de temps de gestion de contention (52).

**8.)** Un agencement de communication comprenant au moins un terminal émetteur/récepteur selon la revendication 6 et une station maîtresse émettrice/réceptrice selon la revendication 7.
